# EUROPEAN PATENT SPECIFICATION

(11) **EP 4 350 286 B1**
(45) Date of publication and mention of the grant of the patent: **03.12.2025**
(21) Application number: 23201572.7
(22) Date of filing: 04.10.2023
(51) Int. Cl.: G01C 15/00, H01S 3/02, H01M 50/242

(54) **CONSTRUCTION LASER LEVEL**
LASER LEVEL
NIVEAU DE LASER CONSTRUCTION

(30) Priority: 05.10.2022 US 202263378416 P; 18.05.2023 US 202318319938; 18.05.2023 US 202318319988
(43) Date of publication of application: 10.04.2024
(60) Divisional application: 25198293.0
(73) Proprietor: Stanley Black & Decker, Inc., New Britain, CT 06053 (US)
(72) Inventor: SCHMITTDIEL, Michael C., Baltimore, 21231 (US); JIANG, Jia Yong, Suzhou, 215021 (CN); MA, Grady Jiqiu, Suzhou, 215021 (CN); BAUER, Michael W., Baltimore, 21211 (US)
(74) Representative: SBD IPAdmin

(56) References cited:
- EP-A1- 3 842 741
- WO-A1-2022/071986
- US-A1- 2014 272 528

## Description

The present invention relates to laser levels, i.e. laser level tools, battery powered laser levels, laser level brackets, and laser level systems.

There are various existing laser levels and laser level systems. It is desired to provide a laser level with an improved construction.

EP 3842741A1 discloses a similar laser level system.

A first aspect of the present invention provides a laser level system according to Claim 1 of the appended claims.

Preferred, and other optional, features of the invention are defined and described in the dependent claims.

It is to be understood that any feature or features, including any optional feature or features, of any aspect or embodiment of the invention or disclosure, may be a feature or features, including an optional feature or features, of any other aspect or embodiment of the invention or disclosure.

Features and embodiments are further described below by way of exemplary embodiments.
Fig. 1 illustrates a perspective view of a laser level system according to an exemplary embodiment;
Fig. 2 is a perspective view of a bracket of the exemplary embodiment of the laser level system;
Fig. 3 is a partially shadowed perspective view of a bracket of the exemplary embodiment of the laser level system;
Fig. 4 is a partially shadowed perspective view of a laser level system according to an exemplary embodiment;
Fig. 5 is an illustration of a perspective view of electrical components of the laser level system according to the exemplary embodiment;
Fig. 6 is a perspective view of a battery assembly according to an exemplary embodiment;
Fig. 7 is an exploded view of the battery assembly according to the exemplary embodiment;
Fig. 8 is an exploded view of a battery assembly according to another exemplary embodiment; and
Fig. 9 is close-up perspective view of a portion of the battery assembly according to an exemplary embodiment.

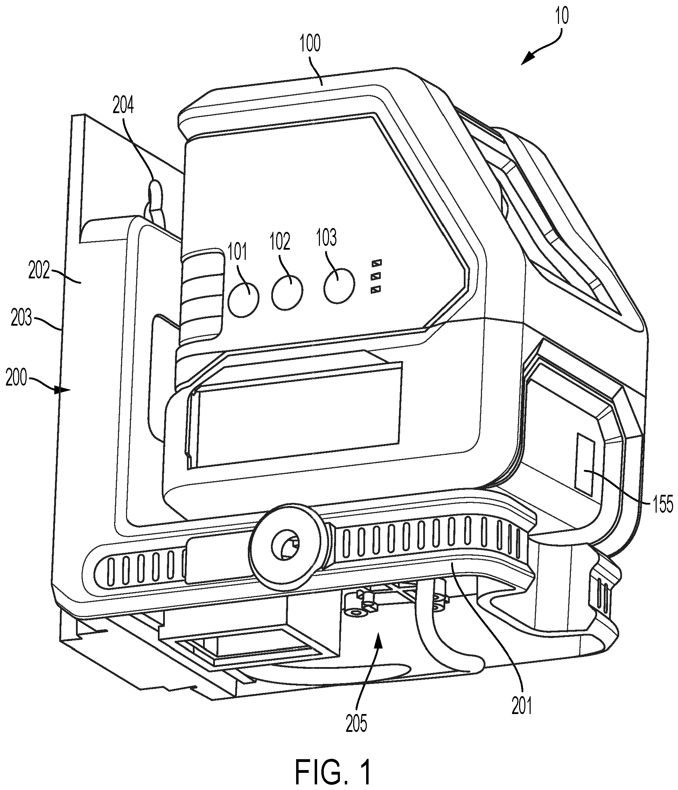

Fig. 1 illustrates a non-limiting exemplary embodiment of a laser level system according to the present application. As shown in Fig. 1, the laser level system 10 includes a laser level 100 and a bracket 200. The laser level 100 is rotatably fixed to the bracket 200. In the present exemplary embodiment, the laser level 100 is fixed to the bracket 200. In other embodiments, the laser level 100 may be removably attached to the bracket 200.

The laser level 100 of the exemplary embodiment is rotatable relative to the bracket about a central vertical axis. In the exemplary embodiment, the laser level 100 is rotatable with a gross and fine adjustment. In other embodiments, the laser level 100 may be rotatable about more than one axis such as, for example, multiple vertical axes or multiple vertical axes and a non-vertical axis. The laser level 100 of the exemplary embodiment is a cross line and plumb spot laser. Accordingly, it is configured to project a vertical line, a horizontal line that crosses with the vertical line, and a plumb spot. In other embodiments, the laser level 100 may project a variety of different lines or spots. For example, in other embodiments the laser may be a 3 x 360 laser level, a cross-line laser level or may project lines and spots in various numbers. A laser spot may also be referred to as a laser dot. A 3 x 360 laser level may project three lines. The three lines may include two vertical lines and one horizontal line. The two vertical lines may be generally perpendicular to one another. The 3 x 360 laser level may include three laser generators each including a laser diode for producing each of the lines. A cross-line laser level may project a vertical line and a horizontal line intersecting. Various dots may be added to a cross-line laser level such as five dots. For example, a laser level may project a vertical line, a horizontal line, an upward dot, a downward dot, a forward dot, a leftward dot and a rightward dot. The internals and general operation of various types of cross, dot and cross and dot laser levels is known. For example, the internal structure and operation of a 3 x 360 laser level and operation is shown and described in U.S. Patent Application Publication No. 2018/0321035. Internal structure of a laser level for projecting cross-lines and dots is shown in U.S. Patent Application Publication No. 2018/0106616. Internal structure of a laser level for projecting five dots is shown in U.S. Patent Application Publication No. 2017/0314921.

The laser level 100 of the present exemplary embodiment includes three user-operable actuators 101, 102, 103. The actuators selectively activate and deactivate the vertical line, horizontal line, and the plumb spot. In this manner, the user may choose to select any combination of the laser lines or spot to project. For example, a user may activate the vertical line and the plumb spot, but not the horizontal line. This allows the user to project only the lines or spots desired by the user and may save charge of a power source such as a battery. The laser level 100 may also include a state of charge indicator 104 indicating a state of charge of the power source 300 for the laser level system 10.

As further shown in Figs. 1-3, the laser level system 10 further includes a bracket 200. As shown, the bracket includes a base 201 and a mounting portion 202. The laser level 100 is supported on the base 201. The mounting portion 202 can be mounted to a surface. In the exemplary embodiment, the mounting portion 202 includes a plurality of magnets at a rear side 203 of the mounting portion 202. The magnets allow the mounting portion 202 to be mounted to a metal object such as a metal beam. As will be appreciated, the level assembly 10 is thus attached to the metal beam. When the mounting portion 202 is attached to a flat vertical surface, the mounting portion 202 extends vertically and the base 210 portion extends transversely to the mounting portion 202 in a horizontal direction. When leveled, the laser level 100 projects a horizontal beam perpendicular to the mounting portion 202 and parallel to the base 201.

The mounting portion 202 may including alternative or additional attachment or mounting structures. For example, the exemplary embodiment includes a hanging hole 204. The hanging hole 204 allows the bracket 200 to be hung on a screw or nail. The hanging hole 204 of the exemplary embodiment has a wider portion at the bottom to allow a screw or nail head to protrude through and a narrower portion at the top. The wider portion of the hanging hole 204 can be moved over the head of a nail or screw that is secured to a wall and then the bracket 200 can be allowed to be lowered so that the nail or screw head is aligned with the narrower portion at the top of the hanging hole 204. In order to remove the bracket 200, the process is reversed as the mount is lifted to align the wider portion of the hanging hole 204 with the screw or nail thread and then the bracket 200 can be removed from the nail or screw.

In other embodiment there may be other attachment structures such as a securing clamp or a strap.

The base 201 of the exemplary embodiment includes a screw thread attachment 205. The screw thread attachment 205 allows the base to be connected to a tripod or other stand or device. In some exemplary embodiments, there may be more than one screw thread attachment of different sizes to accommodate various attachments.

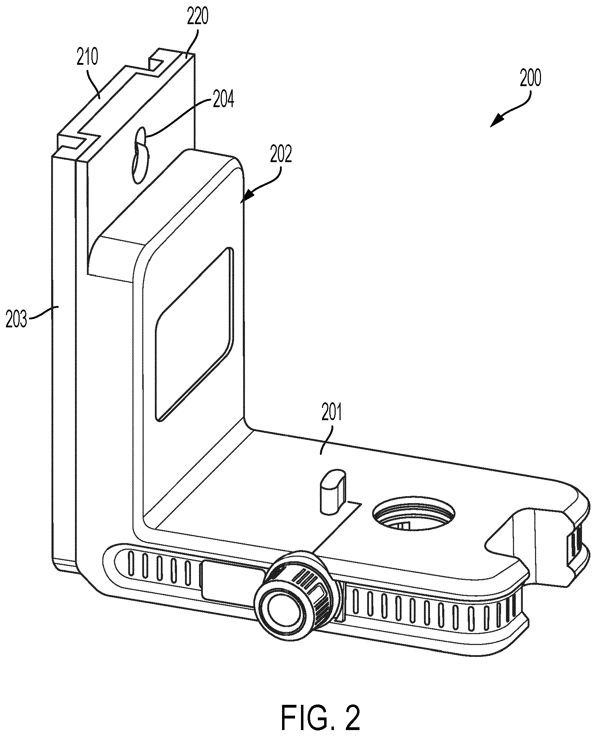

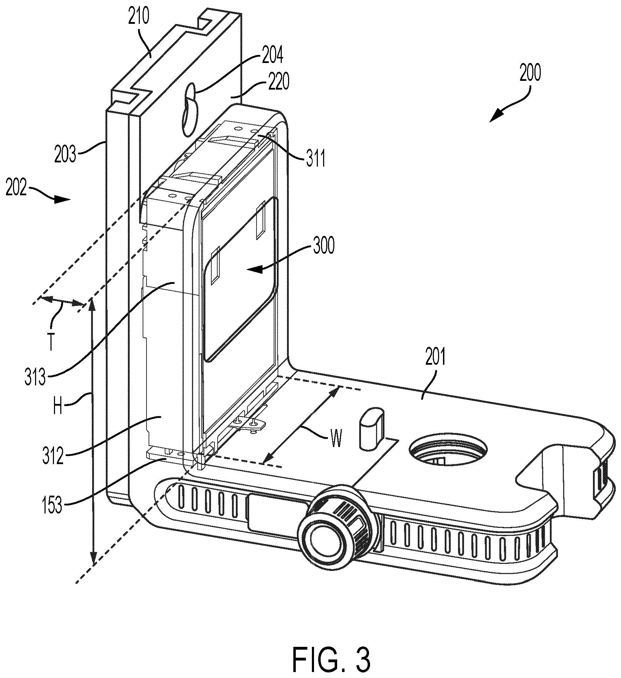

As shown in Figs. 1-3, the mounting portion 202 has a housing portion 210 that provides a cavity for a power source 300. In Figs. 1 and 2, the housing portion 210 is shown as solid. In Fig. 3 the housing portion 210 is shown in partial shadow and the power source 300 can be seen. As shown, the housing portion 210 provides a generally rectangular cavity and the power source 300 has a generally rectangular shape. As shown, the power source 300 has a height H travelling along the height of the mounting portion 202. The power source 300 has a thickness T in the direction of the projection of the base 201. The power source 300 has a width W along the width of the bracket 200. In the exemplary embodiment, the height H is greater than the width W. Also, the width W is greater than the thickness T. These dimensions may allow a compact laser level system 10 that is configured to be mounted as discussed above. For example, in the exemplary embodiment, the thickness T is relatively small and less than the height H or width W. This allows the laser level 100 to be relatively close to the mounting portion 202 and the mounting rear surface 203. Since the laser level 100 has weight, positioning the laser level 100 relatively close to the mounting portion 202 and the mounting rear surface 203 may allow for easier or more secure mounting. The further away the laser level is from the mounting rear surface 203, the greater the mounting force required from any magnets to mount the laser level system 10. The power source 300 of the exemplary embodiment is an integral power source 300 that is built into the laser level system 10. The integral power source 300 of the exemplary embodiment is intended to remain part of the laser level system 10 during normal usage such as through charging cycles, in contrast to a removable power tool battery pack that is configured to be routinely removed and replaced in the normal course of use.

The bracket 200 may comprise a housing including a first housing part 210 and a second housing part 220. The first housing part 210 and the second housing part 220 may be made of plastic, for example a hard plastic such as an ABS plastic. The power source 300 may be held between the first housing part 210 and the second housing part 220. As shown, the power source 300 may be enclosed within the bracket 200 and in particular within the housing comprising the first housing part 210 and the second housing part.

The thickness T of the power source 300 may be less than 50 millimeters (mm), less than 40 mm, less than 30 mm, or less than 20 mm. The height H of the power source 300 may be less than the height of the mounting portion 202. The width W of the power source 300 may be less than the width of the base 201.

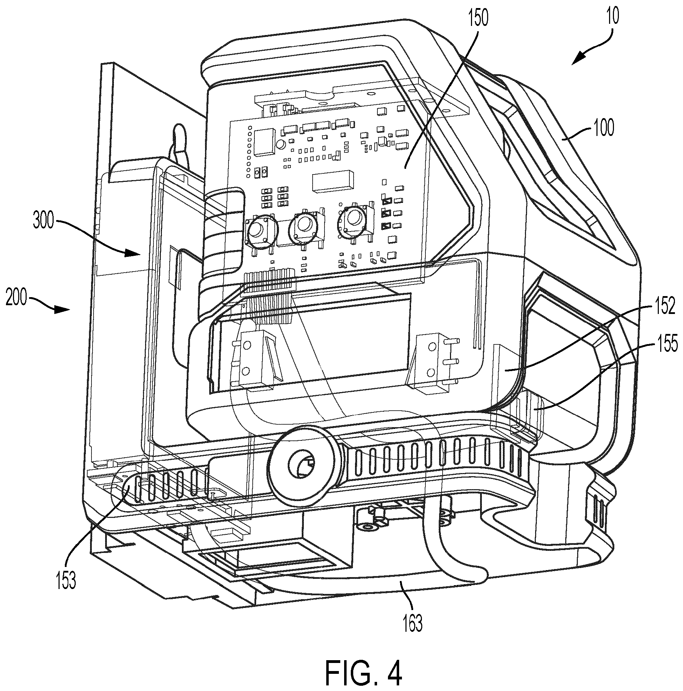

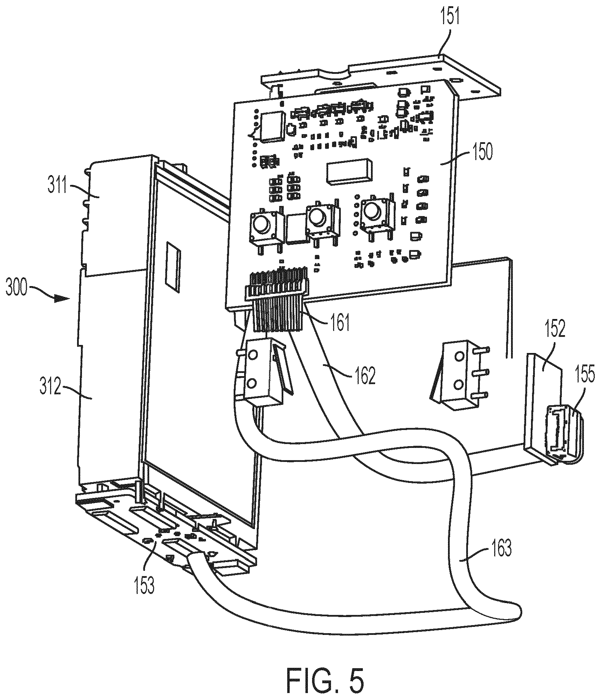

Fig. 4 is a partial shadow view of the laser level system 10 illustrating some internal components of the laser level system 10. Fig. 5 is a perspective view of an electrical assembly of the laser level system 10.

As shown in Figs. 4 and 5, the laser level 100 includes a first printed circuit board 150, a second printed circuit board 151 and a third circuit board 152 which may also be a printed circuit board. Various electrical components may be mounted on the circuit boards 151, 152 and 153. These electronic components may include a controller, such as a micro-processor, and various sensors such as an accelerometer, current sensor, light sensor or other of a variety of known sensors. The electronic components may include charging circuitry for charging the power source 300.

As shown, actuators 101, 102 and 103 are mounted on printed circuit board 150. A port 155 is mounted on the circuit board 152. The port 155 may be a USB port and may be used for the transfer of power and/or data. The port 155 may receive or distribute power and receive or distribute data. As shown in Fig. 1, the port 155 is accessible by a user at the laser level 100. A user may plug in a USB cord connected to a wall outlet to supply an electrical charge to the laser level system 10 through the port 155. For example, the electrical charge may be provided to the laser level system 10 in order to charge the power source 300 and may do so through charging circuitry on one or more of the circuit boards 151, 152, 153. The user may also plug in a USB cord connected to a computing device such as a laptop computer or a smartphone. The user may then download data from the laser level system 10 or provide updated data or programming to the laser level system 10. The downloaded data may include use information such as time used, or temperature detected during use.

As shown, the circuit boards 150, 151, 152 and 153 are electrically connected to one another through wires 161, 162 and 163. The wires 161, 162, 163 provide electric and data communication between the circuit boards 150, 151, 152 as well as the power source 300. Accordingly, for example, a controller may be mounted on a circuit board 151 and control various components on the circuit boards 151 and 152. As another example, the port 155 may be mounted on another or additional circuit board and accessible elsewhere. For example, the port 155 may be part of the bracket 200 rather than the laser level 100.

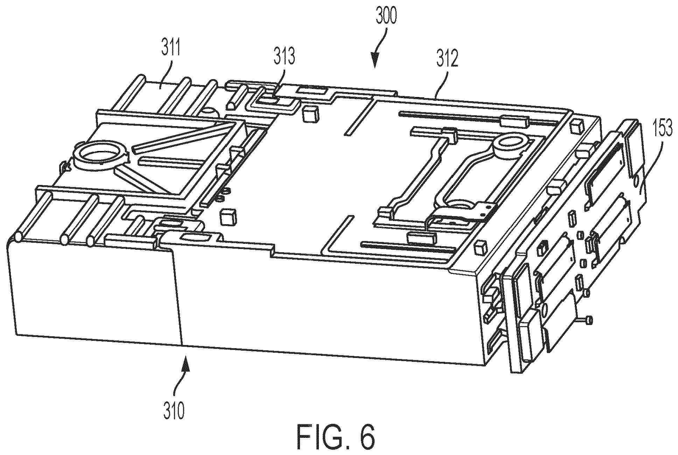

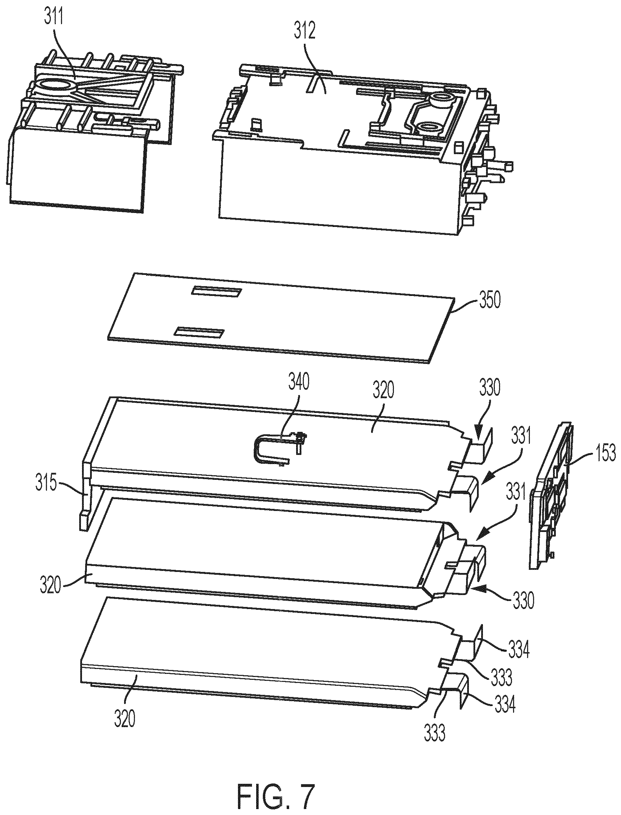

Figs. 6 and 7 illustrate an embodiment of the power source 300. In the exemplary embodiment, the power source 300 is a battery power source in the form of a battery cell stack assembly or battery assembly 300. Fig. 6 is a perspective view of the battery assembly 300. Fig. 7 is an exploded view of the battery assembly 300.

The battery assembly 300 includes a housing 310. The housing 310 includes a rear housing 311 and a front housing 312. The rear housing 311 is generally rectangular shaped with an open forward end. The front housing 312 has a generally rectangular shape with an open rearward end. The rear housing 311 and the front housing 312 attach together to form the rectangular box housing 310 which includes a rectangular box shaped cavity for containing battery cells. The rear housing 311 and the front housing 312 generally meet at the connection point 313. The front housing 312 is considered a front housing because it contains a forward or front portion of the battery cells 320 relative to the rear housing 311. The housing 310 may have an open top. This allows the battery cells 320 to be placed into the housing 310. The housing 310 may then include a top housing part to close the top after the battery cells 320 are placed into the front and rear housings 312, 311. The top may also be left open and enclosed by the structure of the bracket 200.

Fig. 7 is an exploded view of the battery assembly 300. As shown, the battery assembly 300 includes three battery pouch cells 320. The pouch cells are battery cells which may have any battery chemistry including various Lithium-ion or other battery cell chemistries. The pouch cells have a pair of electrical tabs 330 and 331 at a front end thereof. The tabs 330 and 331 have a generally "L" shape with a projecting portion 333 that projects in the same direction as the longitudinal length of the battery cell 320 and a transverse portion 334 at a direction generally transverse to the projecting portion 333. In the exemplary embodiments, the transverse portion 334 is generally perpendicular or perpendicular to the projecting portion 333. As shown, the transverse portion 334 of first electrical tab 330 extends in the opposite direction of the transverse portion 334 of the second electrical tab 331.

As further shown in Fig. 7, the battery assembly 300 may further include a gap pad 350. The gap pad 350 absorbs expansion from the battery cells 320. For example, the gap pad 350 may be a foam pad such that it can be compressed if the battery cells 320 expand. This prevents undue pressure from being placed on the housing 300 or the battery cells 320. In the exemplary embodiment of Fig. 7, the gap pad 350 is disposed between the battery cell 320 and the housing 300. In other embodiments, the gap pad 350 may be placed elsewhere and there may be more than one gap pad 350.

The battery assembly 300 also includes a thermistor 340. The thermistor 340 is connected to the circuit board 153. The circuit board 153 may include a controller mounted thereon or may be connected to a controller. If a thermistor measures a temperature that is above a threshold, the controller may shut off power from the battery assembly 300, lower the power level supplied from the battery assembly 300 or take some other action.

The battery assembly 300 may further include a structural support plate 315. The structural support plate 315 is located at a rear end of the battery cells 320 and abuts a rear end of the housing 300. The structural support plate 315 may strengthen the battery assembly 300 and help with alignment.

The first and second electrical tabs 330, 331 are electrically connected to the circuit board 153. In the exemplary embodiment, the tabs 330, 331 are soldered to the circuit board 153. In some embodiments, the tabs 330, 331 may be electrically connected to the circuit board 153 by soldering or other structures or methods and may also projects through the circuit board 153.

As shown in Figs. 2 and 3, the battery assembly 300 is disposed in the mounting portion 202. The circuit board 153 is at a bottom of the battery assembly 300 when disposed in the mounting portion 202 of the bracket 200 such that the circuit board 153 is adjacent to the base 201. Accordingly, the tabs 330, 331 are also at the bottom and adjacent to the base 201.

The battery assembly 300 includes three pouch battery cells 320. In other embodiments, the battery assembly 300 may include a lesser or greater number of pouch battery cells 320, such as two, four, five, six or more pouch battery cells 320. Additionally, in other embodiments, the pouch battery cells may be a different size or shape.

In the exemplary embodiment of Figs. 1-7, the battery assembly 300 includes a battery assembly housing 310 and the battery assembly housing 300 is housed in the bracket 200. In particular, the pouch battery cells 320 are housed in the battery assembly housing 310, with a portion (particularly the tabs 330, 331) projecting out of the assembly housing 310. The battery assembly housing 310 is then housed in the bracket 200. In other embodiments, the battery assembly may lack a separate battery assembly housing. Instead, the battery assembly may be directly housed in the bracket 200. The bracket 200 may include internal ribs or other features for directly housing the battery assembly without an intermediate battery assembly housing 310.

The battery assembly 300, or another variation of the battery assembly as described herein, may also be located at a different position than that shown in the exemplary embodiment of Figs. 1-7. For example, the battery assembly 300 may be disposed on the base 201, for example on the top or bottom of the base 201. If disposed on the bottom of the base 201, the screw thread of the base may be eliminated or the battery assembly or base may be modified to accommodate the battery assembly and a screw thread.

The battery assembly 300 or other variation may also be incorporated into the laser level 100 rather than the bracket 200. For example, the battery assembly 300 may be incorporated into the rear side of the laser level 100 closest to the mounting portion 202 of the mount. In that case, there may be no need for wiring or other electrical connection between the mount and laser level. Locating the battery assembly in a rear side of the laser level may be advantageous for keeping a compact design and maintaining weight near the mounting portion 202 in order to provide for effective mounting of the laser level system 10. The battery assembly may also be located in other areas of the laser level 100 such as the top, one or both of the sides or elsewhere.

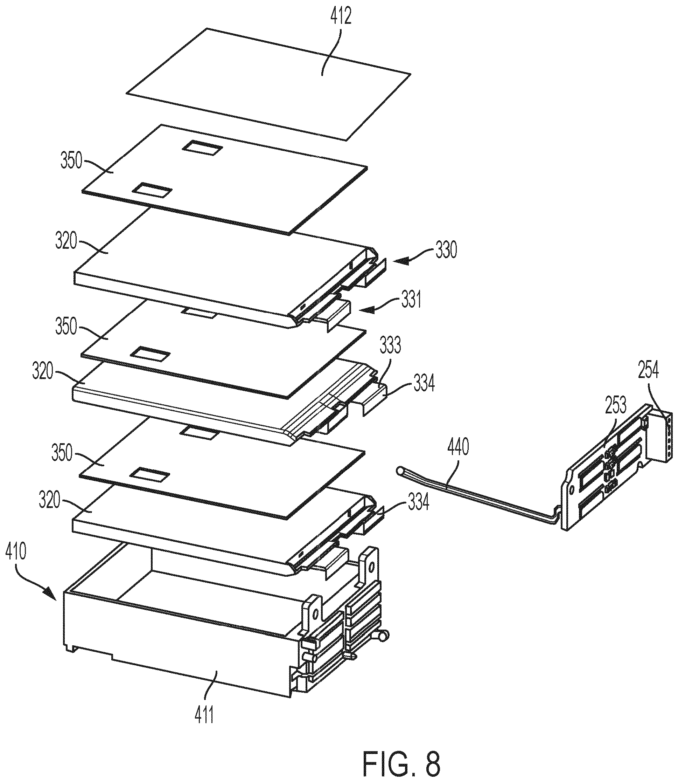

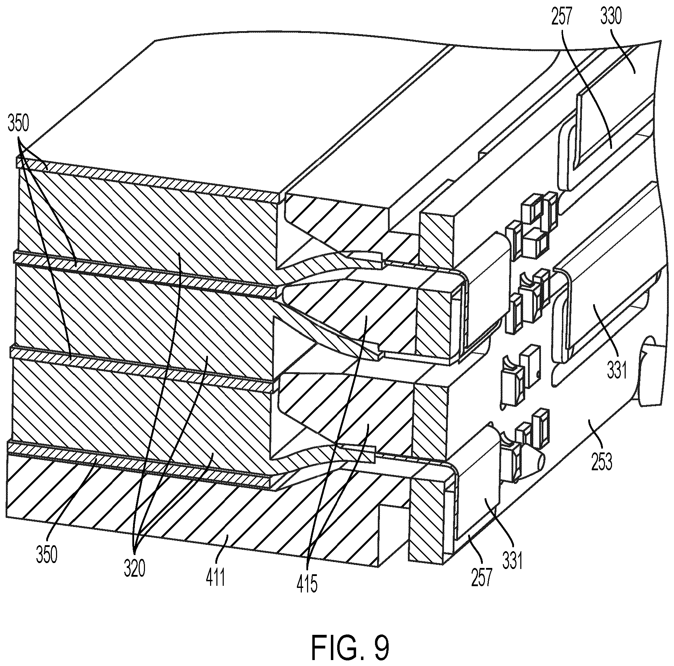

Figs. 8 and 9 illustrate another exemplary embodiment of a battery assembly 400 that may be used instead of the battery assembly 300. The battery assembly 400 is similar to battery assembly 300 unless otherwise noted. Fig. 8 is an exploded view of the battery assembly 400 and Fig. 9 is a close-up perspective view of a portion of a front corner of the battery assembly 400.

As shown in Fig. 8, the battery assembly 400 includes three pouch battery cells 320. The pouch battery cells include first tabs 330 and second tabs 331, as described above. The exemplary embodiment of a battery assembly 400 includes three gap pads 350.

The battery assembly 400 includes a battery housing 410. The battery housing 410 includes a first housing part 411 and a second housing part 412. The first housing part 411 includes a bottom and four sidewalls. Each of the three pouch battery cells 320 and the gap pads 350 may be placed in the first housing part 411. The second housing part 412 can then be attached to the first housing part 411 to enclose the battery cells 320 and gap pads 350. The second housing part 412 may be secured to the first housing part 411 by snap fit, fasteners, adhesives or other structures or methods.

The battery assembly 400 further includes a circuit board 253. The circuit board 253 is generally the same as circuit board 153, but the circuit board includes a wire harness connector 254 for receiving wires. Additionally, the battery assembly 400 includes a thermistor 440. The thermistor 440 serves the same function as the thermistor 340. The thermistor 440 may extend along a length of the battery assembly 400. Various components and designs between the two battery assemblies and circuit boards may be combined or substituted. For example, the circuit board 253 may instead have wires soldered onto the circuit board and the circuit board 153 may include a wire harness connector. As another example, the thermistor 440 may be used in the battery assembly 300.

Fig. 9 illustrates a connection between tabs 330, 331 and a printed circuit board such as printed circuit board 253. As shown, the tabs 330 and 331 may vary is size and location. The first housing part 411 includes spacers 415. Tabs 330 and 331 project through holes between the spacers 415. The spacers 415 provide a physical distance between the tabs 330 and 331 and help to prevent a short during assembly or usage. The transverse portions 334 of the tabs 330, 331 abut pads 257 on the printed circuit board 253 and are laser welded to the pads 257. This provides an electrical connection between the battery cells 320 and the printed circuit board 253.

While the invention has been described by way of exemplary embodiments, it is understood that the words which have been used herein are words of description, rather than words of limitation. Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims. For example, it is to be understood that the present disclosure contemplates that, to the extent possible, one or more features of any embodiment can be combined with one or more features of any other embodiment.

## Claims

1. A laser level system (10), comprising:
a bracket (200) comprising a mounting portion (202) for mounting the bracket (200) to an object or a structure, and a base portion (201) extending transverse to the mounting portion (202);
a laser level (100) mounted on the base portion (201) of the bracket (200), rotatable relative to the bracket (200) and configured to project at least one laser line; and
a power source (300), configured to power the laser level (100), disposed in the bracket (200);
**characterized in that**:
the power source (300) comprises a battery assembly which is an integral part of the bracket (200) and not removable from the bracket (200), the integral battery assembly (300) comprising a battery assembly housing (310) and a plurality of pouch cells (320) housed in the battery assembly housing (310), each of the plurality of pouch cells (320) including a plurality of electrically conducting tabs (330, 331) extending from a longitudinal end of the pouch cell (320);
the integral battery assembly (300) further comprises a circuit board (153, 253) which forms part of, or is attached to, the battery assembly housing (310), and each electrically conducting tab (330, 331) of each pouch cell (320) is connected to the circuit board (153, 253), thereby electrically connecting each pouch cell (320) to the circuit board (153, 253); the circuit board (153, 253) is located adjacent to the longitudinal end of each pouch cell (320) from which the electrically conducting tabs (330, 331) extend, and the circuit board (153, 253) is oriented transverse to the longitudinal direction of each pouch cell (320); and
the electrically conducting tabs (330, 331) of adjacent pouch cells (320) are separated from each other by electrically resistive spacers (415) located therebetween, the spacers (415) being part of the battery assembly housing (310).

2. A laser level system (10) according to Claim 1, wherein the power source (300) is disposed in the mounting portion (202) of the bracket (200).

3. A laser level system (10) according to Claim 1 or Claim 2, wherein each pouch cell (320) is generally flat and elongate in shape.

4. A laser level system (10) according to Claim 3, wherein the pouch cells (320) are arranged in a stack, e.g. a generally or substantially horizontal stack, in the battery assembly housing (310).

5. A laser level system (10) according to any preceding claim, wherein the circuit board (153, 253) is oriented substantially perpendicular to the longitudinal direction of each pouch cell (320).

6. A laser level system (10) according to any preceding claim, wherein the battery assembly housing (310) includes one or more compressible gap pads (350), configured to absorb an expansion of one or more of the pouch cells (320).

7. A laser level system (10) according to Claim 6, wherein at least one gap pad (350) is located between a pair of pouch cells (320).

8. A laser level system (10) according to any preceding claim, further comprising an electrical charging port (155), preferably a USB port, through which the power source (300) is configured to be charged.

9. A laser level system (10) according to Claim 8, wherein the electrical charging port (155) is in the bracket (200).

10. A laser level system (10) according to Claim 8, wherein the electrical charging port (155) is in the laser level (100).

## Patentansprüche

1. Lasernivelliersystem (10), umfassend:
eine Halterung (200), die einen Montageabschnitt (202) zum Montieren der Halterung (200) an einem Objekt oder einer Struktur und einen Basisabschnitt (201) umfasst, der sich quer zu dem Montageabschnitt (202) erstreckt;
einen Lasernivellierer (100), der auf dem Basisabschnitt (201) der Halterung (200) montiert ist, in Bezug zur Halterung (200) drehbar ist und konfiguriert ist, um mindestens eine Laserlinie zu projizieren; und
eine Leistungsquelle (300), die konfiguriert ist, um den Lasernivellierer (100) mit Leistung zu versorgen, die in der Halterung (200) angeordnet ist;
**dadurch gekennzeichnet, dass**:
die Leistungsquelle (300) eine Batterieanordnung umfasst, die ein integraler Bestandteil der Halterung (200) ist und nicht von der Halterung (200) entfernbar ist, wobei die integrierte Batterieanordnung (300) ein Batterieanordnungsgehäuse (310) und eine Vielzahl von Beutelzellen (320) umfasst, die in dem Batterieanordnungsgehäuse (310) untergebracht sind, wobei jede der Vielzahl von Beutelzellen (320) eine Vielzahl von elektrisch leitenden Laschen (330, 331) beinhaltet, die sich von einem Längsende der Beutelzelle (320) erstrecken;
die integrierte Batterieanordnung (300) weiter eine Leiterplatte (153, 253) umfasst, die einen Teil des Batterieanordnungsgehäuses (310) bildet oder daran befestigt ist, und jede elektrisch leitende Lasche (330, 331) jeder Beutelzelle (320) mit der Leiterplatte (153, 253) verbunden ist, wodurch jede Beutelzelle (320) mit der Leiterplatte (153, 253) elektrisch verbunden ist; die Leiterplatte (153, 253) sich angrenzend an das Längsende jeder Beutelzelle (320) befindet, von dem sich die elektrisch leitenden Laschen (330, 331) erstrecken, und die Leiterplatte (153, 253) quer zur Längsrichtung jeder Beutelzelle (320) ausgerichtet ist; und
die elektrisch leitenden Laschen (330, 331) angrenzender Beutelzellen (320) durch dazwischen befindliche elektrisch resistive Abstandshalter (415) voneinander getrennt sind, wobei die Abstandshalter (415) Teil des Batterieanordnungsgehäuses (310) sind.

2. Lasernivelliersystem (10) nach Anspruch 1, wobei die Leistungsquelle (300) im Montageabschnitt (202) der Halterung (200) angeordnet ist.

3. Lasernivelliersystem (10) nach Anspruch 1 oder Anspruch 2, wobei jede Beutelzelle (320) im Allgemeinen flach und länglich geformt ist.

4. Lasernivelliersystem (10) nach Anspruch 3, wobei die Beutelzellen (320) in einem Stapel, z. B. einem im Allgemeinen oder im Wesentlichen horizontalen Stapel, im Batterieanordnungsgehäuse (310) angeordnet sind.

5. Lasernivelliersystem (10) nach einem vorstehenden Anspruch, wobei die Leiterplatte (153, 253) im Wesentlichen senkrecht zur Längsrichtung jeder Beutelzelle (320) ausgerichtet ist.

6. Lasernivelliersystem (10) nach einem vorstehenden Anspruch, wobei das Batterieanordnungsgehäuse (310) ein oder mehrere komprimierbare Lückenpolster (350) beinhaltet, die konfiguriert sind, um eine Ausdehnung einer oder mehrerer der Beutelzellen (320) zu absorbieren.

7. Lasernivelliersystem (10) nach Anspruch 6, wobei sich mindestens ein Lückenpolster (350) zwischen einem Paar von Beutelzellen (320) befindet.

8. Lasernivelliersystem (10) nach einem vorstehenden Anspruch, weiter umfassend einen elektrischen Ladeanschluss (155), vorzugsweise einen USB-Anschluss, über den die Leistungsquelle (300) konfiguriert ist, um geladen zu werden.

9. Lasernivelliersystem (10) nach Anspruch 8, wobei sich der elektrische Ladeanschluss (155) in der Halterung (200) befindet.

10. Lasernivelliersystem (10) nach Anspruch 8, wobei sich der elektrische Ladeanschluss (155) in dem Lasernivellierer (100) befindet.

## Revendications

1. Système de niveau laser (10), comprenant :
un support (200) comprenant une partie de montage (202) pour le montage du support (200) sur un objet ou une structure, et une partie de base (201) s'étendant transversalement à la partie de montage (202) ;
un niveau laser (100) monté sur la partie de base (201) du support (200), rotatif par rapport au support (200) et configuré pour projeter au moins une ligne laser ; et
une source d'alimentation (300), configurée pour alimenter le niveau laser (100), disposée dans le support (200) ;
**caractérisé en ce que** :
la source d'alimentation (300) comprend un ensemble batterie qui fait partie intégrante du support (200) et n'est pas amovible du support (200), l'ensemble batterie intégré (300) comprenant un boîtier d'ensemble batterie (310) et une pluralité de cellules de poche (320) logées dans le boîtier d'ensemble batterie (310), chacune de la pluralité de cellules de poche (320) incluant une pluralité de pattes électriquement conductrices (330, 331) s'étendant à partir d'une extrémité longitudinale de la cellule de poche (320) ;
l'ensemble batterie intégré (300) comprend en outre une carte de circuit (153, 253) qui fait partie du boîtier d'ensemble batterie (310) ou est attachée à celui-ci, et chaque patte électriquement conductrice (330, 331) de chaque cellule de poche (320) est connectée à la carte de circuit (153, 253), connectant ainsi électriquement chaque cellule de poche (320) à la carte de circuit (153, 253) ; la carte de circuit (153, 253) est située de manière adjacente à l'extrémité longitudinale de chaque cellule de poche (320) d'où s'étendent les pattes électriquement conductrices (330, 331), et la carte de circuit (153, 253) est orientée transversalement à la direction longitudinale de chaque cellule de poche (320) ; et
les pattes électriquement conductrices (330, 331) de cellules de poche (320) adjacentes sont séparées les unes des autres par des entretoises électriquement résistives (415) situées entre elles, les entretoises (415) faisant partie du boîtier d'ensemble batterie (310).

2. Système de niveau laser (10) selon la revendication 1, dans lequel la source d'alimentation (300) est disposée dans la partie de montage (202) du support (200).

3. Système de niveau laser (10) selon la revendication 1 ou la revendication 2, dans lequel chaque cellule de poche (320) est généralement de forme plate et allongée.

4. Système de niveau laser (10) selon la revendication 3, dans lequel les cellules de poche (320) sont agencées en une pile, par exemple une pile généralement ou sensiblement horizontale, dans le boîtier d'ensemble batterie (310).

5. Système de niveau laser (10) selon l'une quelconque des revendications précédentes, dans lequel la carte de circuit (153, 253) est orientée sensiblement perpendiculairement à la direction longitudinale de chaque cellule de poche (320).

6. Système de niveau laser (10) selon l'une quelconque des revendications précédentes, dans lequel le boîtier d'ensemble batterie (310) inclut un ou plusieurs tampons d'espacement (350) compressibles, configurés pour absorber une expansion d'une ou de plusieurs des cellules de poche (320).

7. Système de niveau laser (10) selon la revendication 6, dans lequel au moins un tampon d'espacement (350) est situé entre une paire de cellules de poche (320).

8. Système de niveau laser (10) selon l'une quelconque des revendications précédentes, comprenant en outre un port de charge électrique (155), de préférence un port USB, par le biais duquel la source d'alimentation (300) est configurée pour être chargée.

9. Système de niveau laser (10) selon la revendication 8, dans lequel le port de charge électrique (155) est dans le support (200).

10. Système de niveau laser (10) selon la revendication 8, dans lequel le port de charge électrique (155) est dans le niveau laser (100).
